(19) Europäisches Patentamt
European Patent Office
Office européen des brevets

(11) Publication number: **0 346 825 B1**

(12) **EUROPEAN PATENT SPECIFICATION**

(45) Date of publication of patent specification: **07.09.94**

(51) Int. Cl.⁵: **C08L 77/00**, C08K 7/14, C08K 7/20, C08K 3/26

(21) Application number: **89110669.2**

(22) Date of filing: **13.06.89**

(54) **Molding polyamide resin composition.**

(30) Priority: **14.06.88 JP 144644/88**

(43) Date of publication of application:
**20.12.89 Bulletin 89/51**

(45) Publication of the grant of the patent:
**07.09.94 Bulletin 94/36**

(84) Designated Contracting States:
**DE FR GB IT**

(56) References cited:
**DE-A- 2 447 101**
**DE-A- 3 334 561**
**US-A- 3 968 071**
**US-A- 4 528 304**

(73) Proprietor: **MITSUBISHI GAS CHEMICAL COMPANY, INC.**
**5-2, Marunouchi 2-chome**
**Chiyoda-Ku**
**Tokyo, 100 (JP)**

(72) Inventor: **Nomura, Isao**
**1001-9, Nakahara Shimojuku**
**Hiratsuka-shi Kanagawa-ken (JP)**
Inventor: **Narita, Kenichi**
**1-16-5, Fujimino**
**Hiratsuka-shi Kanagawa-ken (JP)**
Inventor: **Fujishiro, Takeshi**
**125-1, Shindo**
**Hiratsuka-shi Kanagawa-ken (JP)**

(74) Representative: **Kraus, Walter, Dr. et al**
**Patentanwälte Kraus, Weisert & Partner**
**Thomas-Wimmer-Ring 15**
**D-80539 München (DE)**

**Description**

This invention relates to a molding resin composition composed of a polyamide or a resin mixture of a polyamide resin and a polymer of a monomer having a vinyl group, and an inorganic filler consisting of a glass filler and calcium carbonate.

More specifically, this invention relates to a resin composition for use as a molding material which gives articles requiring high dimensional accuracy and wheel-shaped articles, particularly articles susceptible to weldline formation, having excellent physical properties with good moldability.

Polyamide resins have excellent mechanical and chemical properties, and are widely used as a molding material for electrical and electronic component parts, machine and precision parts and automotive parts.

A resin composition comprising a polyamide resin and glass fibers has improved thermal and mechanical properties, and is used to produce various mechanical parts (DE-A 33 34 561). However, for production of wheel-shaped articles such as pancake tape reel hub and a bearing retainer and machine parts such as fitting parts, the above resin composition containing ordinary glass fibers sometimes does not give the desired properties because these articles require mechanical strength, particularly rigidity, and high dimensional acccuracy.

If such an article is formed from a mixture of a polyamide resin and ordinary glass fibers alone as a reinforcing material, no sufficient dimensional accuracy can be obtained because of anisotropy in molding shrinkage, and if the molded article is thin-walled, deformations such as warping after molding may occur. Further, Katz et al. (Handbook of Fillers and Reinforcements for Plastics (1978), p. 311) describes that the replacement of a portion of the fibers by glass spheres produces improved physical properties, such as impact resistance, stiffness, toughness, shrinkage and mould flow.

Furthermore, if an article having a weld portion because of its restrictions in shape is produced from a thermosetting resin containing only ordinary glass fibers as a reinforcing material, the weld portion is generally does not have sufficient mechanical properties.

These problems may be solved by adding a scaly inorganic filler to the polyamide resin (for the purpose of preventing deformation after molding) or adding a spherical filler or a fibrous filler having a small aspect ratio to the polyamide (for the purpose of improving dimensional accuracy or the strength of the weld portion). However, no improved method has yet been discovered which solves all of these problems at the same time.

It is an object of this invention, therefore, to solve these problems of the prior art, and to provide a polyamide resin composition for use as a molding material capable of giving dimensional accuracy, dimensional stability, freedom from deformation after molding, and excellent mechanical properties of the weld portion.

It has now been found that the object of the invention is achieved by a resin composition for use as a molding material obtained by incorporating glass fibers of different fiber lengths composed of chopped strands and milled fibers, glass beads and calcium carbonate in a polyamide resin or a mixture of a polyamide resin and a polymer of a monomer having a vinyl group.

Thus, according to this invention there is provided a molding resin composition comprising 100 parts by weight of a polyamide resin and 30 to 250 parts by weight of an inorganic filler, the inorganic filler consisting of (a) 100 parts by weight of a glass filler composed of 5 to 90 % by weight of glass fibers composed of chopped strands and milled fibers and 95 to 10 % by weight of glass beads (the total weight percent being 100), and (b) 20 to 400 parts by weight of calcium carbonate.

There is also provided a molding resin composition comprising 100 parts by weight of (A) a mixture of 60 to 95 % by weight of a polyamide resin and 40 to 5 % by weight of a polymer of a monomer having a vinyl group (the total weight percent being 100) and 20 to 250 parts by weight of (B) an inorganic filler, the inorganic filler (B) consisting of (a) 100 parts by weight of a glass filler composed of 5 to 90 % by weight of glass fibers composed of chopped strands and milled fibers and 95 to 10 % by weight of glass beads (the total weight percent being 100), and (b) 20 to 400 parts by weight of calcium carbonate.

The polyamide resin used in this invention may include, for example, polyamide resins obtained by polycondensation of lactams having a ring with 4 or more members, or omega-amino acids, or by polycondensation of dibasic acids and diamines.

Examples of the lactams having a ring with 4 or more members or the omega-amino acid are epsilon caprolactam, omega-laurolactam, omega-aminocaprylic acid and omega-aminolauric acid.

Examples of the polyamides obtained from dibasic acids and diamines include polymers or copolymers from dibasic acids such as glutaric acid, adipic acid, azelaic acid, sebacic acid, suberic acid, dodecanedioic acid, eicodioic acid, isophthalic acid and terephthalic acid and diamines such as tetramethylenediamine, hexamethylenediamine, octamethylenediamine, m-xylylenediamine, p-xylylenediamine and p-phenylenediamine.

Specific examples of the polyamides are polyamide 4, polyamide 6, polyamide 12, polyamide 66, polyamide 610, polyamide 612, poly(m-xylylene adipamide), poly(m-xylylene sebacamide), poly(m-xylylene dodecamide), poly(hexamethylene terephthalimide), and mixtures and copolymers of these polyamides.

The use of polyamide resins having a m-xylylene group (to be referred to as the "MX nylon") gives molded articles having particularly superior mechanical properties and water resistance.

Preferred MX nylons are those which are synthesized by polycondensation reaction between m-xylylenediamine alone or a mixture of at least 60 % by weight of m-xylylenediamine and not more than 40 % by weight of p-xylylenediamine, and alpha, omega-straight chain aliphatic dibasic acids having 6 to 20 carbon atoms such as adipic acid, sebacic acid, suberic acid, dodecanedioic acid and eicodionic acid. In view of the balance between moldability and the properties of the molded article, adipic acid is especially preferred as the alpha,omega-straight chain aliphatic dibasic acid.

The use of a mixture of MX nylon and polyamide 66 as the polyamide resin produces an effect of improving the moldability of MX nylon or shortening the molding cycle time. From the standpoint of shortening the cycle time, polyamide 66 is effective in proportions over a wide range relative to MX nylon. The proportion of polyamide 66 is 50 to 1 % by weight for 50 to 99 % by weight of MX nylon (the total weight percent being 100), preferably 40 to 3 % by weight for 60 to 97 % of MX nylon.

If the proportion of polyamide 66 added is below the specified lower limit, the effect of MX nylon to improve moldability is small. If the proportion of polyamide 66 added is above the specified upper limit, the mechanical strength of the molded article is degraded or the other properties of the molded article tends to be reduced owing to water absorption.

The incorporation of a polymer (both a homopolymer and a copolymer) of a monomer having a vinyl group in the polyamide resin in this invention can further improve dimensional accuracy, particularly dimensional changes with time.

Examples of the homopolymer or copolymer obatined by polymerizing a monomer having a vinyl group include polystyrene, acrylonitrile/butadiene/styrene copolymer, acrylonitrile/butadiene/acrylic rubber copolymer, acrylonitrile/ethylene-propylene rubber/styrene copolymer, styrene/acrylonitrile copolymer, ethylene/propylene copolymer, ethylene/propylene/butadiene copolymer, and mixtures of these.

Especially preferably, the polymer or copolymer obtained by polymerizing monomers having a vinyl group has an aromatic ring. The vinyl polymer or copolymer having an aromatic ring has moderate affinity for the polyamide resin, and its addition can improve dimensional changes at the time of water absorption, and the cost of production in practical application can be curtailed.

The proportion of the polymer or copolymer obtained by polymerizing monomers having a vinyl group is 40 to 5 % by weight for 60 to 95 % by weight of the polyamide resin (the total weight percent being 100), preferably 20 to 95 % by weight for 80 to 95 % by weight of the polyamide resin. If its amount is above the specified limit, physical properites are degraded, and specifically, the heat distortion temperature and the modulus of the molded article are reduced.

If the amount of the vinyl polymer or copolymer is above the specified limit, a greater effect can be expected in improving dimensional changes with time.

The glass fibers used in this invention are a mixture at least two types of glass fibers having different fiber lengths and states of bundling. Specifically, they are a mixture of chopped strands having an average fiber length of about 1.0 to 10 mm which are bundled with a bundling agent and are generally used for reinforcing plastics, and milled glass fibers having a small aspect ratio and an average fiber length of about 0.01 to 1.5 mm and not being bundled.

The proportion of each of the chopped strands and the milled fibers is preferably 20 to 80 % by weight to 80 to 20 by weight. If the proportion of the chopped strands is above the specified upper limit, dimensional stabiilty and dimensional accuracy are reduced. If the proportion of the chopped strands is less than the specified lower limit, sufficient physical properties may not be obtained.

The glass beads used in this invention may be any glass beads which are generally used as a fille for plastics. Preferably, the glass beads have an average particle diameter of about 5 to 100 micrometers. If the average particle diameter is less than 25 micrometers, the operability of the resulting resin composition in extrusion is reduced. If it is larger than 100 micrometers, its reinforcing effect and the dimensional accuracy of the molded article are reduced.

The preferred proportion of the glass beads relative to the glass fibers in the glass filler used in this invention is 95 to 10 % by weight for 5 to 90 % by weight of the glass fibers (the total weight percent being 100).

If the proportion of the glass beads is above the specified upper limit, the mechanical strength such as tensile and flexural strength, of the molded article are reduced. If it is below the specified lower limit, the dimensional accuracy of the molded article and the strength of its weld portion are reduced.

As regards the proportions of the glass fibers composed of chopped strands and milled fibers and the glass beads, if the proportion of the glass fibers is below the limit specified in this invention, the reinforicng effect is impaired. If the proportion of the glass fibers exceeds the upper limit specified in this invention, inconvenience occurs in extrusion molding.

Calcium carbonate used in this invention has an average particle diameter of 1 to 10 micormeters. If its average particle diameter is less than 1 micrometer, the handlability of this filler is reduced. If it exceeds 10 micrometers, the impact strength of the resulting molded article is reduced.

The proportion of calcium carbonate in the inorganic fillers is 20 to 400 parts by weight, preferably 20 to 200 parts by weight, per 100 parts by weight of the glass filler. By incorporating calcium carbonate in proportions within this range, the dimensional accuracy of the molded article can be increased and the cost of production can be curtailed without impairing the mechanical properties of the article.

The inorganic filler (B) composed of the glass filler and calcium carbonate is used in an amount of 30 to 250 parts by weight, preferably 30 to 100 parts by weight, per 100 parts by weight of the polyamide resin or the mixture of the polyamide resin and the vinyl polymer or copolymer. If the amount of the inorganic filler is less than 30 parts by weight per 100 parts by weight of the resin, the dimensional accuracy and the heat distortion temperature are reduced. If it is larger than 250 parts by weight per 100 parts by weight of the resin, inconvenience occurs in extrusion molding.

The resin composition of this invention can be produced by melt-kneading the ingredients by using an ordinary vent-type extruder or a similar device. The melt-kneading temperature is preferably 5 to 50 $^\circ$C higher than the melting poit of the resin.

Ordinary additives such as stabilizers against degradation by oxidation, heat or ultraviolet rays, nucleating agents, fire retarding agents, and slip agents may be incorporated in the resin composition of this invnetion in amounts which do not adversely effect the properties of the resulting composition.

The molding resin composition of this invention has excellent moldability and is very useful as a material for producing molded articles having excellent mechanical properties (tensile strength, flexural strength), thermal properties (heat distortion temperature and chemical resistance and particularly molded articles which require mechanical strength at the weld part, dimensional accuracy, or freedom from deformation after molding.

The following examples illustrate the present invention in greater detail.

All parts in these Examples and Comparative Examples are by weight, and the various properties were measured by the following methods.

(1) Tensile strength: ASTM D638

(2) Flexural strength: ASTM D790

(3) Strength of the weld portion

Test pieces having the same shapes as shown in ASTM D638 and ASTM D790 and a weld portion at the center were tested as in ASTM D638 and D790 to measure tensile strength and flexural strength. The comparative strengths of the weld portions relative to the strengths of the test pieces having no weld portion measured in (1) and (2) were calculated.

(4) Amount of deformation after molding

A disc-like test piece stipulated in ASTM D955 was placed on a horizontal flat plate, and its height in the thickness direction was measured. The balance between its maximum value and minimum value was calculated.

(5) Dimensional stability and dimensional accuracy

Twenty or more shots of the test piece stipulated in ASTM D955 were prepared under the same molding conditions, and the average size and the standard deviation of the molded articles were measured.

4

EXAMPLE 1

Seventy-two parts of poly(m-xylylene adipamide) having an average molecular weight of 16,000 ("N-MXD6" for short), and 28 parts of polyamide 66 (Amilan CM3001, a tradename for a product of Toray Inc.), in the absence of AS resin (Styrac AS 783, a tradename for a product of Asahi Chemical Industry Co., Ltd.), 30 parts of chopped strands of glass fibers (Chopped Strand CS03 JAFT-2, a tradename for a product of Asahi Fiberglass Co., Ltd.; length 1.5 - 4.5 mm; fiber diameter 9 micrometers; bundled width 1 to 5 mm), 30 parts of powdery milled glass fibers (Milled Fibers MFT-10; fiber length 0.1 to 0.3 mm; average single fiber diameter about 13 micrometers) 60 parts of glass beads (Glass Beads EGB731A-PN, a tradename for a product of Toshiba Ballotini Company Limited; average particle diameter about 50 micrometrs), and 80 parts of calcuim carbonate (Calcium Carbonate NS-100, a tradename for a product of Nitto Funka Kogyo Co., Ltd.; average particle diameter 1 to 3 micrometers) were mixed, and melt-kneaded at a cylinder temperature of 285 °C by using a single-screw type extruder and extruded in the form of a strand. The strand was cooled with water, cut to pellets, and dried to give a molding resin composition.

By using an injection-molding machine, the pelletized resin composition was molded at a mold temperature of 130 °C and a cylinder temperature of 280 °C to prepare various test pieces according to the methods of ASTM. The test pieces were tested as described above.

The results are shown in Table 1.

EXAMPLES 2-3

Example 1 was repeated except that the proportion of the components used were changed as indicated in Table 1.

The results are shown in Table 1.

COMPARATIVE EXAMPLES 1-4

For comparison, Example 1 was repeated except that the types or proportions of the components were changed as shown in Table 2.

The results are shown in Table 2.

## Table 1

| Example | | 1 | 2 | 3 |
|---|---|---|---|---|
| Proportion of the components (parts) | Nylon-MXD 6 | 72 | 72 | 50 |
| | Polyamide 66 | 28 | 8 | 12.5 |
| | AS resin | 0 | 20 | 37.5 |
| | Chopped strands | 30 | 10 | 25 |
| | Milled fibers | 30 | 17 | 12.5 |
| | Glass beads | 60 | 9 | 87.5 |
| | Calcium carbonate | 80 | 9 | 25 |
| (1) Strength of the test piece having no weld portion | | | | |
| Tesnile strength $(Kg/cm^2)$ | | 1538 | 1004 | 1229 |
| Flexural strength $(Kg/cm^2)$ | | 2160 | 1442 | 1758 |
| (2) Strength of the weld portion | | | | |
| Tensile strength $(Kg/cm^2)$ | | 1500 | 944 | 1192 |
| Flexural strength $(Kg/cm^2)$ | | 1991 | 1413 | 1670 |
| (3) Relative strength of the weld portion(*1) | | | | |
| Tensile strength | | 0.98 | 0.94 | 0.97 |
| Flexural strength | | 0.92 | 0.98 | 0.95 |
| (4) Amount of deformation after molding (mm) | | 0.19 | 0.31 | 0.25 |
| (5) Dimensional stability (mm) | | 100.60 | 100.41 | 100.37 |
| Standard deviation (mm) | | 0.02 | 0.04 | 0.04 |

(*1): The relative strength is the ratio of the strength of the weld portion to the strength of the test piece having no weld portion

Table 2

| | | Comparative Examples | | | |
|---|---|---|---|---|---|
| | | 1 | 2 | 3 | 4 |
| Proportion of the components (parts) | Nylon-MXD 6 | 75 | 75 | 75 | 75 |
| | Polyamide 66 | 12.5 | 12.5 | 12.5 | 12.5 |
| | AS resin | 12.5 | 12.5 | 12.5 | 12.5 |
| | Chopped strands | - | 25 | 25 | 37 |
| | Milled fibers | 25 | - | 25 | 76 |
| | Glass beads | 25 | 25 | - | 37 |
| | Calcium carbonate | 100 | 100 | 100 | - |
| (1) Strength of the test piece having no weld portion | Tesnile strength (Kg/cm$^2$) | 998 | 1230 | 1115 | 1325 |
| | Flexural strength (Kg/cm$^2$) | 1331 | 1845 | 1820 | 1905 |
| (2) Strength of the weld portion | Tensile strength (Kg/cm$^2$) | 948 | 947 | 925 | 1034 |
| | Flexural strength (Kg/cm$^2$) | 1225 | 1476 | 1583 | 1427 |
| (3) Relative strength of the weld portion(*1) | Tensile strength | 0.95 | 0.77 | 0.83 | 0.78 |
| | Flexural strength | 0.92 | 0.80 | 0.87 | 0.75 |
| (4) Amount of deformation after molding (mm) | | 0.12 | 1.52 | 1.30 | 1.44 |
| (5) Dimensional stability (mm) | | 101.03 | 101.02 | 101.06 | 100.98 |
| Standard deviation (mm) | | 0.02 | 0.04 | 0.04 | 0.08 |

(*1): The relative strength is the ratio of the strength of the weld portion to the strength of the test piece having no weld portion

## Claims

1. A molding resin composition comprising 100 parts by weight of a polyamide resin and 30 to 250 parts by weight of an inorganic filler, the inorganic filler consisting of (a) 100 parts by weight of a glass filler composed of 5 to 90 % by weight of glass fibers composed of chopped strands and milled fibers and 95 to 10 % by weight of glass beads (the total weight percent being 100), and (b) 20 to 400 parts by weight of calcium carbonate.

7

2. A molding resin composition comprising 100 parts by weight of (A) a mixture of 60 to 95 % by weight of a polyamide resin and 40 to 5 % by weight of a polymer of a monomer having a vinyl group (the total weight percent being 100) and 30 to 250 parts by weight of (B) an inorganic filler as defined in claim 1.

3. The molding resin composition of claim 1 or 2 in which the polyamide resin is a polyamide resin obtained from xylylenediamine and an alpha,omega-straight chain aliphatic dibasic acid.

4. The molding resin composition of claim 1 or 2 in which the polyamide resin is a mixture consisting of 50 to 99 % by weight of a polyamide resin obtained from xylylenediamine and an alpha,omega-straight chain aliphatic dibasic acid and 50 to 1 % by weight of polyamide 66 (the total weight percent being 100).

5. The molding resin composition of any one of claims 1 to 4 in which the glass fibers consist of 20 to 80 % by weight of chopped strands having an average fiber length of 1.0 to 10 mm and bundled with a bundling agent, and 80 to 20 % by weight of non-bundled milled fibers having an average fiber length of 0.01 to 1.5 mm (the total weight percent being 100), and the glass beads have an average particle diameter of 25 to 100 micrometers.

6. Use of the resin composition of any one of claims 1 to 5 for the production of pancake tape reel hub.

7. Use of the resin composition of any one of claims 1 to 5 for the production of a bearing retainer.

**Patentansprüche**

1. Form-Harzmasse, dadurch **gekennzeichnet,** daß sie 100 Gew.-Teile eines Polyamidharzes und 30 bis 250 Gew.-Teile eines anorganischen Füllstoffs enthält, wobei der anorganische Füllstoff aus (a) 100 Gew.-Teilen eines Glas-Füllstoffs, bestehend aus 5 bis 90 Gew.-% Glasfasern, die aus zerhackten Strängen und gemahlenen Fasern bestehen, und 95 bis 10 Gew.-% Glasperlen (wobei die Gesamtmenge 100 Gew.-% beträgt) und (b) 20 bis 400 Gew.-Teilen Calciumcarbonat besteht.

2. Form-Harzmasse, dadurch **gekennzeichnet,** daß sie 100 Gew.-Teile (A) eines Gemisches aus 60 bis 95 Gew.-% eines Polyamidharzes und 40 bis 5 Gew.-% eines Polymeren eines Monomeren mit einer Vinylgruppe (wobei die Gesamtmenge 100 Gew.-% beträgt) und 30 bis 250 Gew.-Teile (B) eines anorganischen Füllstoffs nach Anspruch 1 enthält.

3. Form-Harzmasse nach Anspruch 1 oder 2, dadurch **gekennzeichnet,** daß das Polyamidharz ein Polyamidharz ist, das aus Xylylendiamin und einer zweibasischen, geradkettigen, aliphatischen $\alpha,\omega$-Säure erhalten worden ist.

4. Form-Harzmasse nach Anspruch 1 oder 2, dadurch **gekennzeichnet,** daß das Polyamidharz ein Gemisch ist, das aus 50 bis 99 Gew.-% eines Polyamidharzes, erhalten aus Xylylendiamin und einer zweibasischen, geradkettigen, aliphatischen $\alpha,\omega$-Säure, und 50 bis 1 Gew.-% Polyamid 66 besteht (wobei die Gesamtmenge 100 Gew.-% beträgt).

5. Form-Harzmasse nach einem der Ansprüche 1 bis 4, dadurch **gekennzeichnet,** daß die Glasfasern aus 20 bis 80 Gew.-% zerhackten Strängen mit einer mittleren Faserlänge von 1,0 bis 10 mm, die mit einem Bündelungsmittel gebündelt worden sind, und 80 bis 20 Gew.-% nichtgebündelten, gemahlenen Fasern mit einer mittleren Faserlänge von 0,01 bis 1,5 mm bestehen (wobei die Gesamtmenge 100 Gew.-% beträgt) und daß die Glasperlen einen mittleren Teilchendurchmesser von 25 bis 100 $\mu$m haben.

6. Verwendung der Harzmasse nach einem der Ansprüche 1 bis 5 zur Herstellung einer Haspelnabe von Kunstlederband.

7. Verwendung der Harzmasse nach einem der Ansprüche 1 bis 5 zur Herstellung einer Lager-Haltevorrichtung.

**Revendications**

1. Composition de résine de moulage comprenant 100 parties en poids d'une résine de polyamide et 30 à 250 parties en poids d'une charge minérale, la charge minérale comprenant (a) 100 parties en poids d'une charge de verre composée de 5 à 90% en poids de fibres de verre composées de brins hachés et de fibres broyées et 95 à 10% en poids de perles de verre (le pourcentage pondéral total valant 100), et (b) 20 à 400 parties en poids de carbonate de calcium.

2. Composition de résine de moulage comprenant 100 parties en poids de (A) un mélange de 60 à 95% en poids d'une résine polyamide et 40 à 5% en poids d'un polymère d'un monomère ayant un groupe vinylique (le pourcentage pondéral total valant 100) et 30 à 250 parties en poids de (B) une charge minérale tel que défini dans la revendication 1.

3. Composition de résine de moulage selon la revendication 1 ou 2, dans laquelle la résine polyamide est une résine polyamide obtenue à partir de xylylènediamine et d'un diacide alpha,oméga-aliphatique à chaîne droite.

4. Composition de résine de moulage selon la revendication 1 ou 2, dans laquelle la résine polyamide est un mélange constitué de 50 à 99% en poids d'une résine polyamide obtenue à partir de xylylènediamide et d'un diacide alpha,oméga-aliphatique à chaîne droite et 50 à 1% en poids de polyamide 66 (le pourcentage pondéral total valant 100).

5. Composition de résine de moulage selon l'une quelconque des revendications 1 à 4, dans laquelle les fibres de verre sont constituées de 20 à 80% en poids de brins hachés ayant une longueur moyenne de fibre de 1,0 à 10 mm et groupées avec un agent de groupage, et 80 à 20% en poids de fibres broyées non groupées ayant une longueur moyenne de fibre de 0,01 à 1,5 mm (le pourcentage pondéral total valant 100), et les perles de verre ayant un diamètre moyen de particule de 20 à 100 micromètres.

6. Utilisation de la composition de résine selon l'une quelconque des revendications 1 à 5 pour la production de moyeu de bobine plate de bande plate.

7. Utilisation de la composition de résine selon l'une quelconque des revendications 1 à 5 pour la production d'une cage de palier à roulement.